(19) **Europäisches Patentamt**
**European Patent Office**
**Office européen des brevets**

(11) **EP 4 672 051 A1**

(12) **EUROPEAN PATENT APPLICATION**

(43) Date of publication:
**31.12.2025 Bulletin 2026/01**

(21) Application number: **24184889.4**

(22) Date of filing: **27.06.2024**

(51) International Patent Classification (IPC):
**G06F 21/55** (2013.01)   **H04L 9/40** (2022.01)

(52) Cooperative Patent Classification (CPC):
**H04L 63/1425; G06F 21/55; H04L 63/1416;**
**H04L 63/1441**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **British Telecommunications public
limited company
London E1 8EE (GB)**

(72) Inventor: **The designation of the inventor has not
yet been filed**

(74) Representative: **British Telecommunications
public limited company
Intellectual Property Department
9th Floor
One Braham
Braham Street
London E1 8EE (GB)**

(54) **NETWORK PROTECTION**

(57)     A computer-implemented method of protecting
a network is provided. The method receives security alert
data from one or more intrusion detection systems. The
security alert data comprises a plurality of security alerts
relating to the network. The method generates a plurality
of similarity matrices from the security alert data. Each
similarity matrix is generated using a different respective
similarity function and indicates a respective similarity
between each of the security alerts according to that
similarity function. The method generates one or more
attack graphs from the plurality of similarity matrices.
Each attack graph represents a respective set of security
alerts, wherein a similarity between each of the security
alerts in the set, according to at least one of the similarity
matrices, is above a predefined threshold. The method
causes one or more predetermined actions to be taken
with respect to the network to mitigate a respective attack
represented by each of the attack graphs.

Figure 2

EP 4 672 051 A1

**Description**

**Field of the Invention**

The present invention relates to network protection.

**Background to the Invention**

An intrusion detection system (IDS) provides functionality for detecting attacks within a computer network. There are a range of different types of intrusion detection system that are commonly deployed to assist in protecting computer networks.

Some intrusion detection systems, for example, are host-based intrusion detection systems that operate on existing hosts within a computer network. Such host-based intrusion detection systems may, for example, be implemented in software that is executed by that host in addition to its regular computing load(s). By virtue of being located on the hosts within the network, host-based intrusion detection systems may utilise information about their host's internal operation, such as processor loads, filesystem access, command executions, network activity, and so on to detect an attack on that host.

Another type of intrusion detection system is a so called network-based intrusion detection system. Such network-based intrusion detection systems analyse network traffic within the network to detect attacks on the computer systems within the network. That is to say, a computer system operating as a network-based intrusion detection system analyses network traffic within the network to detect attacks on other computer systems within the network. Typically network-based intrusion detection systems will operate on dedicated hosts within the network (i.e. hosts which serve the sole function of performing the network-based intrusion detection), although this need not necessarily be the case.

Further distinctions can be made between intrusion detection systems based on the manner in which they operate to detect attacks. For example, most intrusion detection systems may fall into one of two broad categories of intrusion detection system, namely signature-based intrusion detection systems and anomaly-based intrusion detection systems. Signature-based intrusion detection systems make use of knowledge about the characteristics of specific attacks (i.e. the attack's signature) to identify occurrences of those attacks. Whilst this approach may be effective at detecting known attacks, it is generally unable to detect new types of attack due to the characteristics of such attacks (i.e. their signatures) being unknown in advance. Anomaly-based intrusion detection systems take a different approach which seeks to overcome this weakness. Anomaly-based intrusion detection systems make use of knowledge about the normal behaviour of the system and/or network that they are monitoring. This knowledge can then be used to detect abnormal (or anomalous) behaviour occurring in the system and/or network which may be the result of an attack taking place. Accordingly, anomaly-based systems can detect new types of attack without needing any prior knowledge of their specific characteristics. Some intrusion detection systems combine both approaches to try to achieve the advantages of both. Such systems may be referred to as hybrid intrusion detection systems.

Some intrusion detection systems are also configured to take actions in response to the detection of an attack in order to prevent the attack from being successful, or at least to reduce (or mitigate) the effects of the attack. Such systems may be referred to as an intrusion response system (IRS).

Over time, the threat posed by more advanced adversaries has attracted increasing attention. Such adversaries may have access to a higher-level of resources for carrying out attacks and may have very long term goals. Attacks made by such adversaries, which may also be referred to as an advanced persistent threat (APT), are typically more complex, involving many different steps in pursuit of their long term goals. Each step may use very different techniques and involve different parts of the computer network being attacked. For example, the paper *"Intelligence-Driven Computer Network Defense Informed by Analysis of Adversary Campaigns and Intrusion Kill Chains"* by Hutchin et al. at the Lockheed Martin Corporation describes a so-called *"cyber kill chain"* for an APT having 7 different phases, namely: a *"Reconnaissance"* phase, a *"Weaponization"* phase, a *"Delivery"* phase, an *"Exploitation"* phase, an *"Installation"* phase, a *"Command and Control (C2)"* phase and an *"Actions on Objectives"* phase, whereby the activities carried out during each phase vary significantly. More complex attacks may iterate through each of these phases more than once.

**Summary of the invention**

In a first aspect of the invention, there is provided a computer-implemented method of protecting a network, the method comprising: receiving security alert data from one or more intrusion detection systems, the security alert data comprising a plurality of security alerts relating to the network; generating a plurality of similarity matrices from the security alert data, each similarity matrix being generated using a different respective similarity function and indicating a respective similarity between each of the security alerts according to that similarity function; generating one or more attack graphs from the plurality of similarity matrices, each attack graph representing a respective set of security alerts, wherein a similarity between each of the security alerts in the set, according to at least one of the similarity matrices, is above a predefined threshold; and causing one or more predetermined actions to be taken with respect to the network to mitigate a respective attack represented by each of the attack graphs.

The plurality of similarity matrices may comprise a one-to-one attack similarity matrix that is generated using a respective similarity function that is configured to determine a respective similarity between security alerts based on a similarity between both a respective source of each security alert and a respective destination of each security alert.

The plurality of similarity matrices may comprise a many-to-one attack similarity matrix that is generated using a respective similarity function that is configured to determine a respective similarity between security alerts based on a similarity between a respective destination of each security alert.

The plurality of similarity matrices may comprise a one-to-many attack similarity matrix that is generated using a respective similarity function that is configured to determine a respective similarity between security alerts based on a similarity between a respective source of each security alert.

The plurality of similarity matrices may comprise a many-to-many attack similarity matrix that is generated using a respective similarity function that is configured to determine a respective similarity between security alerts based on a similarity between a destination port of each security alert.

At least one of the similarity functions may be configured to determine a respective similarity between security alerts based, at least in part, on a similarity between a respective destination of one security alert and a respective source of another security alert.

One or more, or all, of the similarity functions may be configured to determine a respective similarity between security alerts based, at least in part, on a similarity between a time to which each security alert relates.

The method may further comprise classifying each of the attack graphs, the respective classification of each attack graph indicating a respective type of attack represented by that attack graph, wherein the one or more predetermined actions are determined based on the respective classifications of the attack graph.

Classifying each of the attack graphs may comprise: converting each attack graph to a feature vector; clustering the feature vectors together with feature vectors from known attack graphs, each of the known attack graphs being associated with a respective classification indicating a respective type of attack represented by that known attack graph; and classifying the attack graphs that are clustered in the same cluster as a known attack graph with the same classification as that known attack graph.

The method may further comprise classifying any attack graphs that are not clustered into the same cluster as a known attack graph with a classification indicating that they represent a new type of attack.

The security alerts may be aggregated security alerts, each aggregated security alert representing one or more individual security alerts having substantially identical properties other than a time to which each security alert relates, wherein a difference between the times to which consecutive security alerts represented by the aggregated security alert relate is less than a predetermined threshold.

In a second aspect of the invention, there is provided a computer system comprising a processor and a memory storing computer program code for performing a method according to the first aspect.

In a third aspect of the invention, there is provided a computer program comprising instructions which, when executed by a computer, cause the computer to carry out a method according to the first aspect.

In a fourth aspect of the invention, there is provided a computer-readable data carrier having stored thereon a computer program according to the third aspect.

In a fifth aspect of the invention, there is provided a data carrier signal carrying a computer program according to the third aspect.

**Brief Description of the Figures**

Embodiments of the present invention will now be described by way of example only, with reference to the accompanying drawings, in which:

Figure 1 is a block diagram of a computer system suitable for the operation of embodiments of the present invention;

Figure 2 is a flowchart representation of a computer-implemented method of protecting a network according to embodiments of the invention;

Figure 3 is a diagrammatic representation of an exemplary attack occurring within a network; and

Figure 4 is a diagrammatic representation of an exemplary attack graph that may be produced by embodiments of the invention for the exemplary attack represented in figure 3.

**Detailed Description of Embodiments**

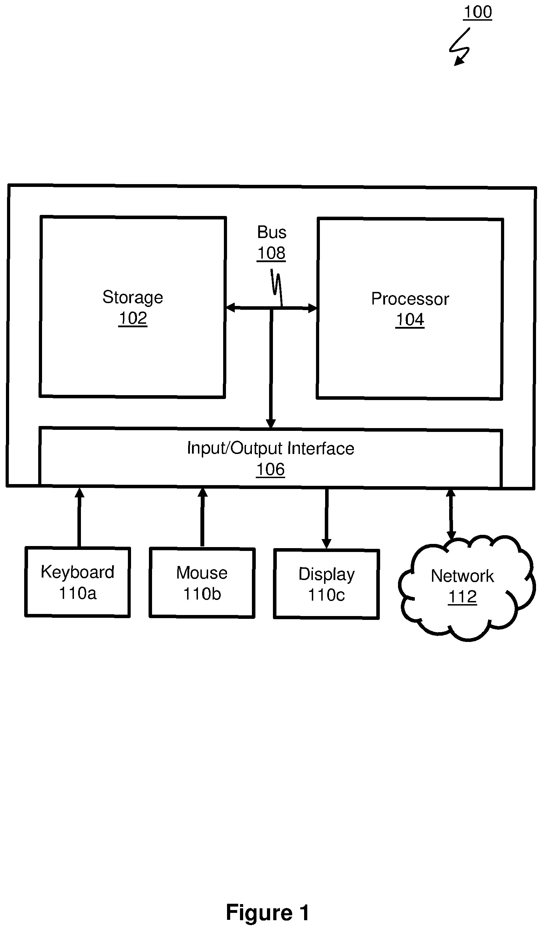

Figure 1 is a block diagram of a computer system 100 suitable for the operation of embodiments of the present invention. The system 100 comprises: a storage 102, a processor 104 and an input/output (I/O) interface 106, which are all communicatively linked over one or more communication buses 108.

The storage (or storage medium or memory) 102 can be any volatile read/write storage device such as a random access memory (RAM) or a non-volatile storage device such as a hard disk drive, magnetic disc, optical disc, ROM and so on. The storage 102 can be formed as a hierarchy of a plurality of different storage devices, including both volatile and non-volatile storage devices, with the different storage devices in the hierarchy providing differing capacities and response times, as is well known in the art.

The processor 104 may be any processing unit, such as a central processing unit (CPU), which is suitable for executing one or more computer programs (or software or instructions or code). These computer programs may be stored in the storage 102. During operation of the system, the computer programs may be provided from the storage 102 to the processor 104 via the one or more buses 108 for execution. One or more of the stored computer programs, when executed by the processor 104, cause the processor 104 to carry out a method according to an embodiment of the invention, as discussed below (and accordingly configure the system 100 to be a system 100 according to an embodiment of the invention).

The input/output (I/O) interface 106 provides interfaces to devices 110 for the input or output of data, or for both the input and output of data. The devices 110 may include user input interfaces, such as a keyboard 110a or mouse 110b as well as user output interfaces such as a display 11 0c. Other devices, such a touch screen monitor (not shown) may provide means for both inputting and outputting data. The input/output (I/O) interface 106 may additionally or alternatively enable the computer system 100 to communicate with other computer systems via one or more networks 112. It will be appreciated that there are many different types of I/O interface that may be used with computer system 100 and that, in some cases, computer system 100 may include more than one I/O interface. Furthermore, there are many different types of device 110 that may be used with computer system 100. The devices 110 that interface with the computer system 100 may vary considerably depending on the nature of the computer system 100 and may include devices not explicitly mentioned above, as would be apparent to the skilled person. For example, in some cases, computer system 100 may be a server without any connected user input/output devices. Such a server may receive data via a network 112, carry out processing according to the received data and provide the results of the processing via a network 112.

It will be appreciated that the architecture of the system 100 illustrated in figure 1 and described above is merely exemplary and that other computer systems 100 with different architectures (such as those having fewer components, additional components and/or alternative components to those shown in figure 1) may be used in embodiments of the invention. As examples, the computer system 100 could comprise one or more of: a personal computer; a laptop; a tablet; a mobile telephone (or smartphone); a television set (or set top box); a games console; an augmented/virtual reality headset; a server; or indeed any other computing device with sufficient computing resources to carry out a method according to embodiments of this invention.

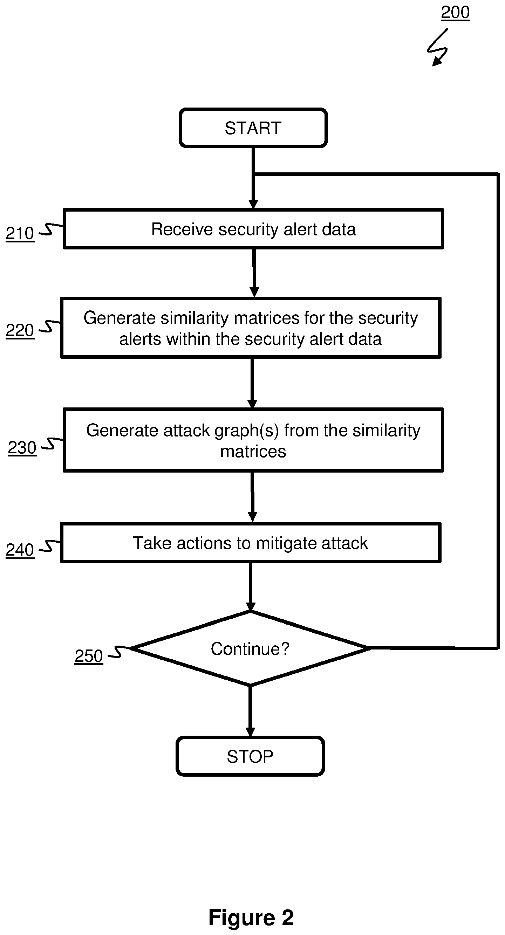

Figure 2 is a flowchart representation of a computer-implemented method 200 of protecting a network according to embodiments of the invention. The method 200 may be performed by any suitable computer system, such as the computer system 100 described with reference to figure 1. The method 200 starts at an operation 210.

At operation 210, the method 200 receives security alert data from one or more intrusion detection systems. The security alert data comprises a plurality of security alerts relating to the network. The intrusion detection systems monitor the network to detect events that are likely to be relevant to the security of the network. Such events may be referred to as security events. In response to detecting a security event, the intrusion detection systems generate a security alert to notify other systems, such as the computer system performing the method 200, of the occurrence of such events. In addition to providing notification about the occurrence of a security event, the security alerts also provide information about the security event. For example, a security alert may indicate a time (e.g. a timestamp) at which the security event took place, a source of the security event (e.g. an IP address of the source computer system associated with the security event), a destination of the security event (e.g. an IP address of the destination computer system associated with the security event) and an attack type. Of course, additional information about the security event may also be included in the security alert, as will be appreciated by those skilled in the art. For example, the security alert may indicate a destination port associated with the security event. The security alert may include other information that is available in relation to the security event, such as any available network information for the source and/or destination. For example the security alert may also include one or more, or all, of: an ISP/organisation that the source and/or destination is associated with, any domain names that are associated with the source and/or destination, any Media Access Control Name Services (MAC) addresses associated with the source and/or destination, and any available geographical information (e.g. an estimated location associated with the IP) of the source and/or destination. Of course, any other relevant information for the security information may be included in addition, or as an alternative to, such examples.

As will be appreciated, the intrusion detection systems from which the security alert data is received may, in some cases, include a mixture of different types of intrusion detection system. For example, the intrusion detection systems may comprise both host-based and network-based intrusion detection systems. Additionally or alternatively, the intrusion detection system may comprise a mixture of signature-based, anomaly-based and/or hybrid intrusion detection systems. However, in other cases, a single type of intrusion detection system may be used.

Preferably, though not necessarily, the security alerts processed by the method 200 are aggregated security alerts (or meta security alerts). That is to say, each of the security alerts represents one or more individual (or raw) security alerts that have substantially the same (or identical) properties to each other, the only significant difference between each of the individual alerts represented by a particular aggregated security alerts being a time to which the individual alerts relate. In general, the aggregated security alert represents all individual alerts that are virtually identical to each other occurring within quick succession to one another. For example, an aggregated security alert may represent a plurality of individual security alerts having the same source, destination (and destination port) and attack type occurring in relatively quick succession.

The aggregation of the individual security alerts into aggregated security alerts may be achieved by ordering the individual alerts according to the time to which they relate and grouping each individual alert into the same aggregated security alert as a preceding alert if the time difference between that individual alert and the preceding alert is less than a predetermined threshold. This means that a difference between the times to which consecutive security alerts represented by an aggregated security alert will be less than that predetermined threshold. Where the difference between a particular individual security alert and a preceding individual security alert is greater than the predetermined threshold, then the particular individual security alert may be represented by a different aggregated security alert from the preceding individual security alert. Each of the aggregated security alerts may indicate a time span that is covered by the individual security alerts that it represents together with the properties (e.g., source, destination and attack type) that are common for each of those individual security alerts. As will be appreciated, any suitable technique for representing the time span covered by the individual security alerts, such as a start and end time, may be used.

In some cases, the method 200 may receive aggregated security alerts directly from the one or more intrusion detection systems. That is to say, the aggregation of the individual security alerts into aggregated security alerts may be performed by the intrusion detection systems. However, in other cases, the method 200 may receive the individual security alerts from the intrusion detection systems and perform the aggregation of those individual security alerts into aggregated security alerts itself.

The aggregation of the individual alerts into aggregated security alerts can help to reduce the volume of alerts for processing without any significant reduction in the effectiveness of the method 200. Indeed, this aggregation process can be implemented with a linear computational complexity $O(n)$, enabling it to operate efficiently on a large number of alerts. Meanwhile, the reduction in the number of alerts that is achieved through this aggregation process can help reduce the computational requirements for subsequent steps of the method 200 that may have higher levels of computational complexity.

Having received security alert data at operation 210, the method 200 proceeds to an operation 220.

At operation 220, the method 200 generates a plurality of similarity matrices from the security alert data. Each of the similarity matrices indicates a similarity between each pair of security alerts in the security alert data as viewed from a particular perspective. These perspectives reflect a high-level view of the patterns that different types of attack take. For example, these perspectives might include two or more, or all, of: a *"one-to-one"* attack perspective, a *"many-to-one"* attack perspective, a *"one-to-many"* attack perspective and a *"many-to-many'* attack perspective, as will be discussed further below. Accordingly, each of the similarity matrices is generated using a different respective similarity function $P(i,j)$ that calculates the similarity between two different security alerts $i$ and $j$ in a manner that reflects the perspective for that similarity matrix. Each similarity matrix is an $n \times n$ matrix where $n$ is the number of security alerts being considered by the method 200 and each element in the matrix represents a respective similarity between a different pair of security alerts.

These similarity functions $P(i,j)$ can be defined using a number of lower-level similarity functions (or sub-functions) $s(i,j)$ by combining those sub-functions $s(i,j)$ in different ways.

A first sub-function $s_s(i,j)$ that may be used is a source similarity sub-function. This sub-function determines the similarity between the respective sources of two security alerts $i$ and $j$. This similarity may be based on any available information relating to the identity of the source of both security alerts, such as an IP address. This sub-function $s_s(i,j)$ may be defined as follows:

$$s_s(i,j) = \begin{cases} 1, & if (srcIP_i = srcIP_j) \\ 0, & otherwise \end{cases}$$

That is to say, the sub-function $s_s(i,j)$ may compare the source IP address $srcIP_i$ of one security alert $i$ to the source IP address $srcIP_j$ of the other security alert $j$. Where the source IP addresses $srcIP_i$ and $srcIP_j$ of the two security alerts $i$ and $j$ are the same (i.e. $srcIP_i = srcIP_j$), indicating that the two security alerts both have the same source, the sub-function may yield a value of one. Otherwise, where the IP addresses $srcIP_i$ and $srcIP_j$ are different (i.e. $srcIP_i \neq srcIP_j$), the sub-function may yield a value of zero.

A second sub-function $s_d(i,j)$ that may be used is a destination similarity sub-function. This sub-function determines the similarity between the destinations of the two security alerts $i$ and $j$. Again, this similarity may be based on any available information relating to the identity of the destination of both security alerts, such as an IP address. This sub-function $s_d(i,j)$ may be defined as follows:

$$s_d(i,j) = \begin{cases} 1, & if(dstIP_i = dstIP_j) \\ 0, & otherwise \end{cases}$$

That is to say, the sub-function $s_d(i,j)$ may compare a destination IP address $dstIP_i$ of one security alert $i$ to a destination IP address $dstIP_j$ of the other security alert $j$. Where the IP addresses $dstIP_i$ and $dstIP_j$ of the two security alerts $i$ and $j$ are the same (i.e. $dstIP_i = dstIP_j$), indicating that the two security alerts both have the same destination, the sub-function may yield a value of one. Otherwise, where the IP addresses $dstIP_i$ and $dstIP_j$ are different (i.e. $dstIP_i \neq dstIP_j$), the sub-function may yield a value of zero.

A third sub-function $s_i(i,j)$ that may be used is an infiltration similarity sub-function. This sub-function determines the similarity between the destination of one security alert $i$ to the source of another, subsequent security alert $j$. This third sub-function $s_i(i,j)$ can help identify related alerts that are the result of the infiltration of a computer system and the subsequent use of that computer system to carry out further attacks on the network. This infiltration may be reflected by the presence of one or more alerts relating to an attack to compromise the computer system - those alerts having that computer system as the destination - and one or more alerts relating to attacks using the compromised (or infiltrated) computer system - those alerts having that computer system as the source. Again, this similarity may be based on any available information relating to the identity of the destination of the earlier security alert $i$ and the source of a subsequent security alert $j$, such as an IP address. This sub-function $s_i(i,j)$ may be defined as follows:

$$s_i(i,j) = \begin{cases} 1, & if(dstIP_i = srcIP_j \land timestamp_i < timestamp_j) \\ 0, & otherwise \end{cases}$$

That is to say, the sub-function $s_i(i,j)$ may compare the destination IP address $dstIP_i$ of a earlier alert $i$ to the source IP address $srcIP_j$ of an later alert $j$ - the earlier alert may be an alert having an associated timestamp $timestamp_i$ that is less than the timestamp of the later alert $timestamp_j$ (i.e. where $timestamp_i < timestamp_j$). Where the IP addresses $dstIP_i$ and $srcIP_j$ are the same (i.e. $srcIP_j = dstIP_i$), indicating that the destination of an alert was the source of a subsequent alert, the sub-function may yield a value of one. Otherwise, where the IP addresses $dstIP_i$ and $srcIP_j$ are different (i.e. $dstIP_i \neq srcIP_j$) and/or where the security alert $j$ did not occur subsequent to the alert $i$, the sub-function may yield a value of zero.

A fourth sub-function $s_p(i,j)$ that may be used is a destination port similarity sub-function. This sub-function determines the similarity between the destination port $dstPort_i$ of one security alert $i$ to the destination port $dstPort_j$ of another security alert $j$. This similarity is independent of the actual destination of each security alert (which may be different), instead focussing on the port. As will be appreciated by those skilled in the art, different ports are associated with different services that typically use those ports. For example, port 22 is typically associated with the SSH service, port 80 is typically associated with HTTP services and port 443 is typically associated with HTTPS services. An attack seeking to exploit a particular vulnerability in some service may therefore trigger multiple alerts all having the same destination port (e.g. the port on which that service is typically available). Therefore, this sub-function $s_p(i,j)$ can link alerts relating to the same attack. This sub-function $s_p(i,j)$ may be defined as follows:

$$s_p(i,j) = \begin{cases} 1, & if(dstPort_i = dstPort_j) \\ 0, & otherwise \end{cases}$$

That is to say, where the destination ports $dstPort_i$ and $dstPort_j$ are the same (i.e. $dstPort_i = dstPort_j$), the sub-function $s_p(i,j)$ may yield a value of one. Otherwise, where the destination ports $dstPort_i$ and $dstPort_j$ are different (i.e. $dstPort_i \neq destPort_j$), the sub-function may yield a value of zero.

Finally, a fifth sub-function $s_t(i,j)$ that may be used is a time similarity sub-function. This sub-function determines a similarity between alerts based on how close in time one security alert $i$ occurred to another security alert $j$. This similarity can be determined based on the timestamps $t_i$ and $t_j$ associated with each of the alerts. In some cases, such as when the security alerts are aggregated security alerts, each of the security alerts $i$ and $j$ may be associated with a range of times (e.g. represented by a start and end timestamp or a start or end timestamp together with a duration). In such cases, the end time $t_{i_{end}}$ of one alert may be compared to the start time $t_{j_{start}}$ of another alert $j$. However, in other cases, where only a single

timestamp $t_i$ and $t_j$ is available for each alert, the comparison may be made based on those timestamps instead (i.e. $t_i$ may be used as $t_{i_{end}}$ and $t_j$ may be used as $t_{j_{start}}$ in the following equation). This sub-function may be defined as follows:

$$s_t(i,j) = \begin{cases} e^{\frac{-\left(t_{i_{end}} - t_{j_{start}}\right)}{\omega_t}}, & if\left(t_{i_{end}} < t_{j_{start}}\right) \\ 1, & otherwise \end{cases}$$

That is to say, where the one alert $i$ precedes the other alert $j$ (e.g. $t_{i_{end}} < t_{j_{start}}$), the sub-function $s_t(i,j)$ yields a value of $e^{\frac{-\left(t_{i_{end}} - t_{j_{start}}\right)}{\omega_t}}$, whereby $\omega_t$ is an optional time window parameter to help normalize the yielded value for a desired time window. As will be appreciated by those skilled in the art, the use of this exponential function yields a low value, that is near to zero, when the time gap between two security alerts is large, and approaches (or nears) one when the time gap is very small (i.e. close to zero). Otherwise, if the alert $i$ does not precede the other alert $j$ (e.g. $t_{i_{end}} \geq t_{j_{start}}$) then the sub-function yields a value of one.

These sub-functions may then be combined to create each of the similarity functions $P(i,j)$ as follows:

$$P(i,j) = \left(W_1 s_i(i,j) \vee \left(W_2 s_s(i,j) + W_3 s_d(i,j)\right) + W_4 s_p(i,j) + W_5 s_t(i,j)\right)$$

That is to say, each of the similarity functions may be specified by applying a different set of weights $W_1$, $W_2$, $W_3$, $W_4$ and $W_5$ to each of the sub-functions that emphasise different elements of similarity between security alerts based on a particular perspective. It will be appreciated that, given the exemplary sub-functions discussed above, where the value of $s_i(i,j)$ is one, the values of $s_s(i,j)$ and $sd(i,j)$ will be zero and similarly when the values of either $s_s(i,j)$ or $s_d(i,j)$ is one, the value of $s_i(i,j)$ will be zero. It may be desirable, for consistency, in some cases, for the weights $W_1$, $W_2$, $W_3$, $W_4$ and $W_5$ to sum to one. In such cases, it follows from the relationship between the values of the sub-functions $s_i(i,j)$, $s_s(i,j)$ and $s_d(i,j)$ that $W_1 = W_2 + W_3$.

For example, the similarity functions may comprise a "*one-to-many*" similarity function $P_{one-to-many}(i,j)$ that can be used to generate a corresponding "*one-to-many*" attack similarity matrix. This "*one-to-many*" similarity function $P_{one-to-many}(i,j)$ may be configured to determine the respective similarity between security alerts based predominantly (or exclusively) on a similarity between the respective source of each security alert. That is, the weights $W_1$, $W_2$, $W_3$, $W_4$ and $W_5$ may be chosen to emphasize the result of the source similarity sub-function $s_s(i,j)$ by making the associated weighting $W_2$ large in comparison to the other weightings. For example, the weighting $W_2$ may be set to be at least 0.5 or higher. In some cases, the "*one-to-many*" similarity function $P_{one-to-many}(i,j)$ may be exclusively based on the output of the source similarity sub-function $s_s(i,j)$ by setting the weighting $W_2$ to be one and the other weightings $W_1$, $W_3$, $W_4$ and $W_5$ to be zero. However, in other cases, the "*one-to-many*" similarity function $P_{one-to-many}(i,j)$ may incorporate at least some of the other sub-functions. In particular, it may be desirable to incorporate the output from the time similarity sub-function $s_t(i,j)$ or the infiltration similarity sub-function $s_i(i,j)$, or both, into the similarity values produced by the "*one-to-many*" similarity function $P_{one-to-many}(i,j)$ (e.g. by setting the values of the weights $W_1$ and $W_5$ to be non-zero respectively), as will be discussed further below. Nonetheless, by basing the "*one-to-many*" similarity function $P_{one-to-many}(i,j)$ predominantly on the source similarity sub-function $s_s(i,j)$, the resulting "*one-to-many*" attack similarity matrix will help to link together security alerts that follow a "*one-to-many*" attack pattern (i.e. by indicating a high level of similarity for such security alerts). Accordingly, the "*one-to-many*" attack similarity matrix may be used to identify attacks such as subnet scanning that follow such a pattern of one source computer system maliciously communicating with multiple destination computer systems targeted as part of an attack.

As another example, the similarity functions may additionally, or alternatively, comprise a "*many-to-one*" similarity function $P_{many-to-one}(i,j)$ that can be used to generate a corresponding "*many-to-one*" attack similarity matrix. This "*many-to-one*" similarity function $P_{many-to-one}(i,j)$ may be configured to determine the respective similarity between security alerts based predominantly (or exclusively) on a similarity between the respective destination of each security alert. That is, the weights $W_1$, $W_2$, $W_3$, $W_4$ and $W_5$ may be chosen to emphasize the result of the destination similarity sub-function $s_d(i,j)$ by making the associated weighting $W_3$ large in comparison to the other weightings. For example, the weighting $W_3$ may be set to be at least 0.5 or higher. In some cases, the "*many-to-one*" similarity function $P_{many-to-one}(i,j)$ may be exclusively based on the output of the destination similarity sub-function $s_d(i,j)$ by setting the weighting $W_3$ to be one and the other weightings $W_1$, $W_2$, $W_4$ and $W_5$ to be zero. However, in other cases, the "*many-to-one*" similarity function $P_{many-to-one}(i,j)$ may incorporate at least some of the other sub-functions. In particular, it may be desirable to incorporate the output from the time similarity sub-function $s_t(i,j)$ or the infiltration similarity sub-function $s_i(i,j)$, or both, into the similarity values produced by the "*many-to-one*" similarity function $P_{many-to-one}(i,j)$ (e.g. by setting the values of the weights $W_1$ and

$W_5$ to be non-zero respectively), as will be discussed further below. Nonetheless, by basing the *"many-to-one"* similarity function $P_{\text{many-to-one}}(i,j)$ predominantly on the destination similarity sub-function $s_s(i,j)$, the resulting *"many-to-one"* attack similarity matrix will help to link together security alerts that follow a *"many-to-one"* attack pattern (i.e. by indicating a high level of similarity for such security alerts). Accordingly, the *"many-to-one"* attack similarity matrix may be used to identify attacks such as distributed denial of service (DDoS) attacks that follow such a pattern of multiple source computer systems maliciously communicating with a single destination computer systems targeted as part of an attack.

As another example, the similarity functions may additionally, or alternatively, comprise a *"one-to-one"* similarity function $P_{\text{one-to-one}}(i,j)$ that can be used to generate a corresponding *"one-to-one"* attack similarity matrix. This *"one-to-one"* similarity function $P_{\text{one-to-one}}(i,j)$ may be configured to determine the respective similarity between security alerts based predominantly (or exclusively) on a similarity between both the respective source of each security alert and the respective destination of each security alert. That is, the weights $W_1$, $W_2$, $W_3$, $W_4$ and $W_5$ may be chosen to emphasize the result of both the source similarity sub-function $s_s(i,j)$ and the destination similarity sub-function $s_d(i,j)$ by making the associated weightings of $W_2$ and $W_3$ equal to each other and large in comparison to the other weightings. For example, the sum of the weightings $W_2$ and $W_3$ may be at least 0.5 or higher. In some cases, the *"one-to-one"* similarity function $P_{\text{one-to-one}}(i,j)$ may be exclusively based on the output of the source similarity sub-function $s_s(i,j)$ and destination similarity sub-function $s_d(i,j)$ by setting the weightings $W_2$ and $W_3$ to both be 0.5 and the other weightings $W_1$, $W_4$ and $W_5$ to be zero. However, in other cases, the *"one-to-one"* similarity function $P_{\text{one-to-one}}(i,j)$ may incorporate at least some of the other sub-functions. In particular, it may be desirable to incorporate the output from the time similarity sub-function $s_t(i,j)$ or the infiltration similarity sub-function $s_i(i,j)$, or both, into the similarity values produced by the *"one-to-one"* similarity function $P_{\text{one-to-one}}(i,j)$ (e.g. by setting the values of the weights $W_1$ and $W_5$ to be non-zero respectively), as will be discussed further below. Nonetheless, by basing the *"one-to-one"* similarity function $P_{\text{one-to-one}}(i,j)$ predominantly on the destination similarity sub-function $s_s(i,j)$, the resulting *"one-to-one"* attack similarity matrix will help to link together security alerts that follow a *"one-to-one"* attack pattern (i.e. by indicating a high level of similarity for such security alerts). Accordingly, the *"one-to-one"* attack similarity matrix may be used to identify attacks such as brute force attacks that follow such a pattern of a single source computer systems maliciously communicating with a single destination computer systems targeted as part of an attack.

As another example, the similarity functions may additionally, or alternatively, comprise a *"many-to-many'* similarity function $P_{\text{many-to-many}}(i,j)$ that can be used to generate a corresponding *"many-to-many'* attack similarity matrix. This *"many-to-many"* similarity function $P_{\text{many-to-many}}(i,j)$ may be configured to determine the respective similarity between security alerts based predominantly (or exclusively) on a similarity between alerts other than the source or destination of each security alert. For example, the weights $W_1$, $W_2$, $W_3$, $W_4$ and $W_5$ may be chosen to emphasize the result of the destination port similarity sub-function $s_p(i,j)$ by setting the weight $W_4$ to be large in comparison to the other weightings $W_1$, $W_2$, $W_3$ and $W_5$. For example, the weighting $W_4$ may be set to be at least 0.5 or higher. In some cases, the *"many-to-many'* similarity function $P_{\text{many-to-many}}(i,j)$ may be exclusively based on the output of the destination port similarity sub-function $s_p(i,j)$ by setting the weighting $W_4$ to be one and the other weightings $W_1$, $W_2$, $W_3$ and $W_5$ to be zero. However, in other cases, the *"many-to-many'* similarity function $P_{\text{many-to-many}}(i,j)$ may incorporate at least some of the other sub-functions. In particular, it may be desirable to incorporate the output from the time similarity sub-function $s_t(i,j)$ or the infiltration similarity sub-function $s_i(i,j)$, or both, into the similarity values produced by the *"many-to-many'* similarity function $P_{\text{many-to-many}}(i,j)$ (e.g. by setting the values of the weights $W_1$ and $W_5$ to be non-zero respectively), as will be discussed further below. Nonetheless, by basing the *"many-to-many"* similarity function $P_{\text{many-to-many}}(i,j)$ predominantly on the destination port similarity sub-function $s_p(i,j)$, the resulting *"many-to-many"* attack similarity matrix will help to link together security alerts that follow a *"many-to-many'* attack pattern (i.e. by indicating a high level of similarity for such security alerts). Accordingly, the *"many-to-many'* attack similarity matrix may be used to identify attacks such as a worm attack that follows such a pattern of multiple source computer systems maliciously communicating with multiple destination computer systems targeted as part of an attack using the same technique (e.g. by communicating with a particular destination port to target a particular service).

In some cases, the similarity functions used to generate the similarity matrices for the different perspectives may be configured to determine a respective similarity between security alerts based, at least in part, on a similarity between a respective destination of one security alert and a respective source of another security alert - that is the component reflected by the infiltration similarity sub-function $s_i(i,j)$ discussed above. As already mentioned, in some cases, the output from the infiltration similarity function $s_i(i,j)$ may be incorporated as part of the alert similarities provided by one or more, or all, of the *"one-to-one", "one-to-many", "many-to-one"* and *"many-to-many'* similarity functions $P_{\text{one-to-one}}(i,j)$, $P_{\text{one-to-many}}(i,j)$, $P_{\text{many-to-one}}(i,j)$ and $P_{\text{many-to-many}}(i,j)$ by setting the weight $W_1$ to an appropriate (e.g. non-zero) value. However, in other cases, a separate similarity function $P_{\text{infiltration}}(i,j)$ may be defined that is predominantly (or exclusively) based on the output of the infiltration similarity function $s_i(i,j)$. Another similarity matrix may then be produced using this separate similarity function $P_{\text{infiltration}}(i,j)$ to represent an *"infiltration"* attack perspective and used alongside one or more, or all, of the other similarity matrices discussed above. The similarity function $P_{\text{infutration}}(i,j)$ may be defined using weights $W_1$, $W_2$, $W_3$, $W_4$ and $W_5$ that are chosen to emphasize the result of the infiltration similarity sub-function $s_i(i,j)$ by making the associated

weighting $W_1$ large in comparison to the other weightings. For example, the weighting $W_1$ may be set to be at least 0.5 or higher. In some cases, the *"infiltration"* similarity function $P_{infiltration}(i,j)$ may be exclusively based on the output of the infiltration similarity sub-function $s_i(i,j)$ by setting the weighting $W_1$ to be one and the other weightings $W_2, W_3, W_4$ *and* $W_5$ to be zero. However, in other cases, the *"infiltration"* similarity function $P_{intiltration}(i,j)$ may incorporate at least some of the other sub-functions by utilising non-zero weightings for one or more, or all, of the other weightings $W_2, W_3, W_4$ *and* $W_5$. The use of the infiltration sub-function $s_i(i,j)$, either as part of one or more, or all, of the *"one-to-one", "one-to-many", "many-to-one"* and *"many-to-many'* similarity functions $P_{one-to-one}(i,j)$, $P_{one-to-many}(i,j)$, $P_{many-to-one}(i,j)$ and $P_{many-to-many}(i,j)$ or as part of its own *"infiltration"* similarity function $P_{intiltration}(i,j)$, or both, enables security alerts relating to an infiltration attack pattern (in which a computer system is first attacked and then used to launch further attacks) to be linked together (through the indication of a high level of similarity for such security alerts).

Similarly, in some cases, the similarity functions used to generate the similarity matrices for the different perspectives may be configured to determine a respective similarity between security alerts based, at least in part, on a similarity between a time to which each security alert relates - that is the component reflected by the time similarity sub-function $s_t(i,j)$ discussed above. As already mentioned, in some cases, the output from the time similarity sub-function $s_t(i,j)$ may be incorporated as part of the alert similarities provided by one or more, or all, of the *"one-to-one", "one-to-many", "many-to-one", "many-to-many'* and *"infiltration"* similarity functions $P_{one-to-one}(i,j)$, $P_{one-to-many}(i,j)$, $P_{many-to-one}(i,j)$, $P_{many-to-many}(i,j)$ and $P_{infiltration}(i,j)$ by setting the weight $W_5$ to an appropriate (e.g. non-zero) value. However, in other cases, a separate similarity function $P_{time}(i,j)$ may be defined that is predominantly (or exclusively) based on the output of the time similarity sub-function $s_t(i,j)$. Another similarity matrix may then be produced using this separate similarity function $P_{time}(i,j)$ to represent an *"time-proximity"* attack perspective and used alongside one or more, or all, of the other similarity matrices discussed above. The similarity function $P_{time}(i,j)$ may be defined using weights $W_1, W_2, W_3, W_4$ *and* $W_5$ that are chosen to emphasize the result of the time similarity sub-function $s_t(i,j)$ by making the associated weighting $W_5$ large in comparison to the other weightings. For example, the weighting $W_5$ may be set to be at least 0.5 or higher. In some cases, the *"time-proximity"* similarity function $P_{time}(i,j)$ may be exclusively based on the output of the time similarity sub-function $s_t(i,j)$ by setting the weighting $W_5$ to be one and the other weightings $W_1, W_2, W_3$ *and* $W_4$ to be zero. However, in other cases, the *"time"* similarity function $P_{time}(i,j)$ may incorporate at least some of the other sub-functions by utilising non-zero weightings for one or more, or all, of the other weightings $W_1, W_2, W_3$ *and* $W_4$. The use of the time similarity sub-function $st(i,j)$, either as part of one or more, or all, of the *"one-to-one", "one-to-many", "many-to-one", "many-to-many"* and *"infiltration"* similarity functions $P_{one-to-one}(i,j)$, $P_{one-to-many}(i,j)$, $P_{many-to-one}(i,j)$, $P_{many-to-many}(i,j)$ and $P_{infiltration}(i,j)$ or as part of its own *"time-proximity"* similarity function $P_{time}(i,j)$, or both, enables security alerts occurring in close proximity to one another (such as in a DDoS) attack to be linked together (through the indication of a high level of similarity for such security alerts).

It will be appreciated that the above described similarity functions and sub-functions are merely exemplary and that any other suitable functions and sub-functions which reflect the similarity between two security alerts from a particular attack perspective may be used instead or in addition to those described above for the generation of respective similarity matrices. In any case, having used a plurality of similarity functions $P(i,j)$ to generate a plurality of similarity matrices, each providing a different perspective on the relationships between the security alerts, the method 200 proceed to an operation 230.

At operation 230, the method 200 generates one or more attack graphs from the similarity matrices. Each of the attack graphs is a graph $G = (V, E)$ having a set of vertices $V$ and edges $E$, wherein each vertex $v \in V$ corresponds to a security alert and each edge $e \in E$ connects two vertices for which a similarity between the security alerts represented by those vertices is above a predefined threshold.

One technique for generating the attack graphs is to start with a complete (or fully-connected) graph $K_n$ of order $n$, where $n$ is the total number of security alerts being considered by the method 200 such that each security alert is represented by a respective vertex $v$ of the graph $K_n$ and each vertex $v$ is connected to every other vertex by a respective edge $e$. That is to say, the graph $K_n$ contains all possible edges e (e.g. $\frac{n(n-1)}{2}$ edges for an undirected graph) between the vertices $V$. The method 200 may then prune this complete graph G by removing all edges $e$ for which the maximum similarity between the respective security alerts represented by the pair of vertices connected by those edges is below the predefined threshold. As will be appreciated from the above description, there are a plurality of similarity values that are indicated for each pair of security alerts - each similarity matrix potentially indicating a different similarity value for each pair of security alerts reflecting a specific perspective being represented by that similarity matrix. Therefore, the maximum similarity between a pair of security alerts may be taken to be the highest similarity value that is indicated for that pair of vertices by the plurality of similarity matrices. Accordingly, so long as a pair of security alerts is determined to be above the predetermined level of threshold from at least one perspective, the respective edge connecting the vertices representing each of those security alerts will not be pruned (or removed) from the graph. Once this pruning is complete, only those edges between pairs of vertices for which the similarity between the corresponding security alerts is above the predefined threshold (from at least one of the perspectives) will remain. In some cases, this may result in a disconnected graph $K_n$, in

which case, each connected subgraph that forms a component of the disconnected graph can be treated as a separate attack graph, thereby resulting in multiple attack graphs being generated. Otherwise, if the graph $K_n$ remains connected after this pruning process, the entire graph $K_n$ may be treated as a single attack graph, thereby resulting in a single attack graph being generated.

Of course, it will be appreciated that other suitable techniques for generating attack graphs from the plurality of similarity matrices may be used instead. For example, another technique that can be used is to follow the opposite approach by seeking to build up an attack graph from an initial vertex representing a particular security alert. This approach may recursively add additional vertices and edges for each security alert that has a similarity to one of the security alerts represented by an existing vertex in the graph that is above the predefined threshold (according to at least one perspective) until no further vertices can be added (i.e. no further security alerts exceed the threshold level of similarity to a security alert that is already represented in the graph).

Preferably (though not necessarily), the attack graph(s) that are generated at operation 230 are directed graphs. That is to say, each edge may be directed such that an edge from a first vertex $v_1$ to a second vertex $v_2$ is considered to be distinct from an edge from the second vertex $v_2$ to the first vertex $v_1$. This directionality of the edges may be used to indicate the time relationship between the security alerts that are represented by each vertex. That is to say, each edge may be directed from a vertex representing an earlier security alert to a vertex representing a subsequent security alert (having the required level of similarity). Accordingly, the attack graph represents the chronology of the security alerts (and therefore the underlying security events that triggered them).

Each of the attack graph(s) that are generated at operation 230 provide a structured representation of a respective attack occurring within the network. That is to say, each attack graph identifies a set of security alerts that are associated with the same attack and the relationships between those alerts. Through the linking of different security alerts from a plurality of different perspectives, such as from the *one-to-one", "many-to-one", "one-to-many"* and *"many-to-many"* attack perspectives described above, an attack graph is generated that is able to reflect the many different stages in a more complex, multi-stage attack, such as might result from an Advanced Persistent Threat (APT). That is to say, the multi-perspective approach taken by the method 200 can identify more complex attacks that might be missed when viewed from a single attack perspective (which might, for example, result in some individual stages of the attack being identified as separate attacks, with other intervening stages not being identified).

Having generated one or more attack graphs at operation 230, the method 200 proceeds to an operation 240.

At an operation 240, the method 200 causes one or more predetermined actions to be taken with respect to the network to mitigate a respective attack represented by each of the attack graphs. That is to say, the method 200 analyses each of the generated attack graphs to determine one or more actions that should be taken in response to the underlying attack represented by that attack graph and causes those one or more actions to be taken. The one or more actions may mitigate the attack, for example, by preventing future stages of the attack from being successful or by mitigating the impact of effects of previous and/or future stages of the attack on the network 200.

In some cases, this analysis may comprise classifying the attack graph, the respective classification of each attack graph indicating a respective type of attack represented by that attack graph (the type of attack reflecting an overall style of complex attack being experienced). This classification may then be used to identify appropriate actions to be taken to respond to the attack represented by that attack graph. For example, the response may comprise taking a set of actions that were previously successful in countering a similar complex attack of the same type that has been experienced previously. That is, an analyst may have previously determined an appropriate set of actions to take in response to that type of threat and stored them in repository from which they can be retrieved in response to future occurrences of that type of threat. Alternatively, an intelligent agent may be trained (e.g using reinforcement learning techniques on previous instances of different types of attack) to determine appropriate actions to take based on the attack graph. Accordingly, the method 200 may provide the generated attack graph to such an intelligent agent to determine the appropriate actions to be taken. In some cases, the classification may indicate that the attack represented by the attack graph is an unknown type of attack - that is, that it is dissimilar to any types of attack that have previously been seen. In such cases, the method 200 may provide an alert to a security analyst of the presence of a new type of attack in the network. In addition to alerting a security analyst, the method 200 may additionally (and optionally) cause one or more other standard predetermined actions to be taken that are considered to be an appropriate response to an unknown type of attack.

The classification of the attack graphs may be achieved by converting each attack graph to a feature vector and then using the feature vector to cluster the attack graph with known attack graphs (each being associated with a respective known classification) by clustering the feature vector with the feature vectors of those known attack graphs. As examples, the feature vectors may comprise one or more, or all, of the following features: a number of nodes in the attack graph; a number of edges in the attack graph; a number of distinct types of attack detected in the attack graph; and a ratio between the number of edges and nodes in the attack graph. However, it will be appreciated that these are merely examples, and that other suitable features may be used in addition or as an alternative to these features. Similarly, any suitable clustering technique may be used. However, the clustering technique is preferably an unsupervised clustering technique, such as MeanShift or Density-based spatial clustering of applications with noise (DBSCAN). Where the feature vector of the attack graph is clustered (or placed) in the same cluster as a known attack graph, the classification of that known attack graph may be used as the classification for the attack graph currently under consideration by the method 200. However, where the feature vector is not clustered (or placed) in the same cluster as any of the known attack graph, the method 200 may classify the attack graph currently under consideration with a classification indicating that it represents a new type of attack.

At an operation 250, the method 200 determines whether to continue processing. It is generally anticipated (although not required) that the method 200 will run continuously (or at least periodically) so as to process new security alerts as they become available. Accordingly, the method 200 may continue until a stop signal is received. In such cases, response to receiving the stop signal, the method 200 determines at operation 250 that the method should end. Otherwise, in the absence of a stop signal, the method 200 may return to operation 210 to process further data. Of course, in other cases, the method 200 may be performed as a single iteration, for example, on demand when requested by a user. In such cases, the method 200 simply ends.

Where further iterations of the method 200 are performed, the method 200 may wait for a predetermined time before the next iteration is performed. The further iteration may then be performed in respect of any new security alerts received before the next iteration is begun. In some cases, the new security alerts may be combined with at least some of the security alerts that were processed in the previous iteration. This can allow further attack steps in an ongoing attack occurring in the period between the previous iteration and the next iteration to be linked to the security alerts relating to the earlier steps in the attack that have already been processed. In order to minimise the amount of processing that needs to be carried out in each subsequent iteration, the method 200 may cache the calculations made during previous iterations for use in future iterations. For example, the method 200 may store the similarity calculations for the security alerts processed in the previous iteration. This means that only the similarity between each pair of new alerts and between each of the new alerts and each of the previous alerts needs to be calculated. Similarly, the method 200 may store the attack graphs generated during the previous iteration and simply look to expand these to include the new alerts where a new alert has a similarity (according to at least one perspective) that is above the predetermined threshold. Of course, such caching is not strictly necessary and, in some cases, the method 200 may recalculate every calculation at each iteration. To prevent an excessive number of security alerts being analysed in subsequent iterations, the method 200 may utilise a time window, with any security alerts that are outside this time window (e.g. that are older than a predetermined threshold at the time of the subsequent iteration) being removed from the security alert data to be processed by the subsequent iteration. Additionally or alternatively, where there is a high degree of confidence that an attack has been mitigated (e.g. through the actions taken during operation 240 of a previous iteration of the method 200), the security alerts relating to that attack (i.e. as represented by the vertices of the corresponding attack graph) may be removed from the security alert data to be analysed in subsequent iterations of the method 200.

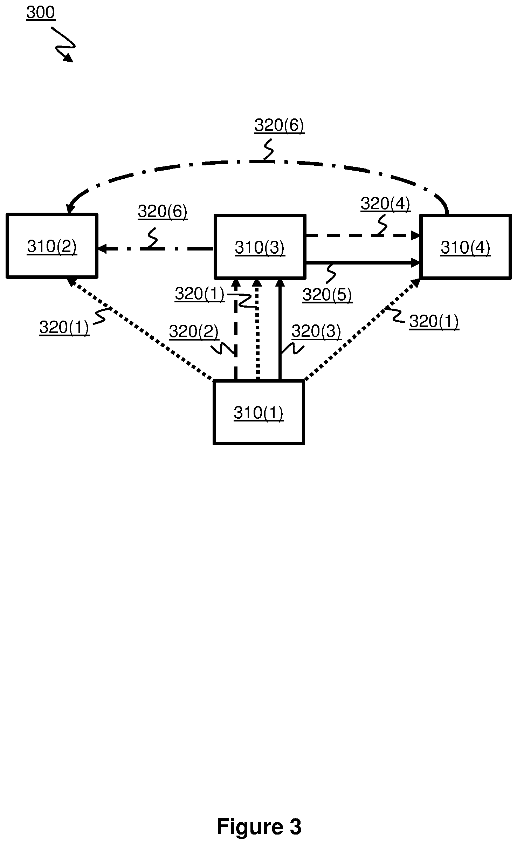

Figure 3 is a diagrammatic representation 300 of an exemplary attack occurring within a network. This exemplary attack, which has been simplified for the purposes of discussing this invention, involves four computer systems 310 within the network. The exemplary attack comprises six attack stages 320. In a first attack stage 320(1), a first computer system 310(1) carries out a network scan to identify other computer systems that may be attacked. This attack stage involves malicious communications from the first computer system 310(1) to a second computer system 310(2), a third computer system 310(3) and a fourth computer system 310(4), as represented by the dotted arrows connecting these computer systems. In a second attack stage 320(2), the first computer system 310(2) carries out a port scan of the third computer system 310(3), as represented by the dashed arrow connecting these computer systems. In a third attack stage 320(3), the first computer system 310(1) exploits some vulnerability in the third computer system 310(3) so as to infiltrate the third computer system 310(3), as represented by the solid arrow connecting these computer systems. In a fourth attack stage 320(4), the third computer system 310(3), having been infiltrated, is used to carry out a port scan of the fourth computer system 310(4), as represented by the dashed arrow between these computer systems. In a fifth attack stage 320(5), the third computer system 310(3) exploits some vulnerability in the fourth computer system 310(4) so as to infiltrate the fourth computer system 310(4), as represented by the solid arrow connecting these computer systems. Finally, in a sixth attack stage 320(6), the third and fourth computer systems 310(4) and 310(4) are used to launch a distributed denial of service attack on the second computer system 310(2), as represented by the dashed and dotted arrow between these computer systems. Each of these attack stages 320 may yield a number of security alerts relating to the malicious communications between the computer systems as part of that attack stage.

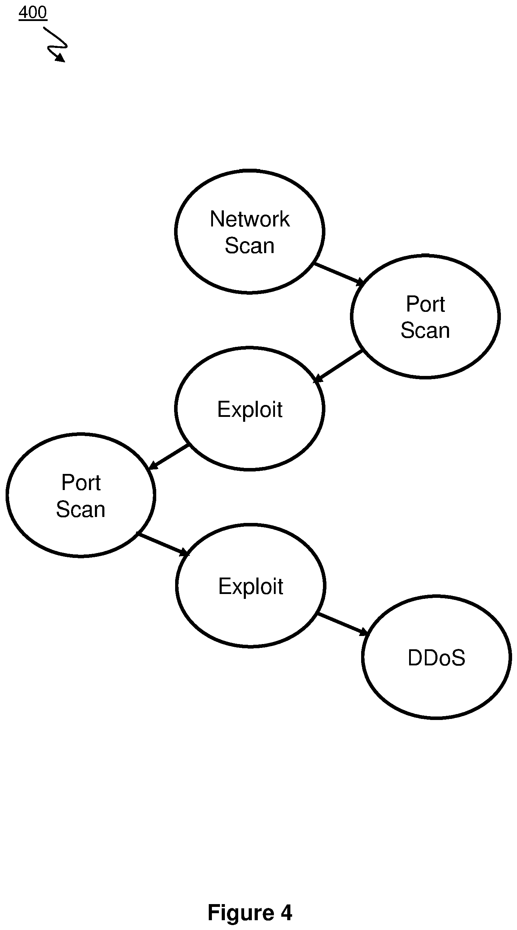

Figure 4 is a diagrammatic representation 400 of an exemplary attack graph that may be produced by the method 200 for the exemplary attack illustrated in figure 3. In this example, the method 200 may utilise the *one-to-one", "many-to-one", "one-to-many"* and *"many-to-many"* attack perspectives described above to link together the security alerts. Through the use of each of these perspectives, the method 200 is able to link together each of the security alerts associated with each stage of the attack and also to link together the different stages of the attack. It is noted that the attack graph represented in figure 4 shows a single vertex for all of the alerts in each stage of the attack. This may be achieved utilising a heuristic that all similar alerts (that is alerts that are indicated as being above the predetermined threshold of similarity according to at least one of the similarity matrices) having the same attack type (e.g. network scan) and occurring within a certain predetermined time window of each other may be combined and represented by a single vertex. Of course, this approach need not be taken and, in an alternative representation of the exemplary attack graph, a separate vertex for each individual security alert may be included.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example. Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention. It will be understood by those skilled in the art that, although the present invention has been described in relation to the above-described example embodiments, the invention is not limited thereto and that there are many possible variations and modifications which fall within the scope of the invention. The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

**Claims**

1. A computer-implemented method of protecting a network, the method comprising:

   receiving security alert data from one or more intrusion detection systems, the security alert data comprising a plurality of security alerts relating to the network;
   generating a plurality of similarity matrices from the security alert data, each similarity matrix being generated using a different respective similarity function and indicating a respective similarity between each of the security alerts according to that similarity function;
   generating one or more attack graphs from the plurality of similarity matrices, each attack graph representing a respective set of security alerts, wherein a similarity between each of the security alerts in the set, according to at least one of the similarity matrices, is above a predefined threshold; and
   causing one or more predetermined actions to be taken with respect to the network to mitigate a respective attack represented by each of the attack graphs.

2. The method of claim 1, wherein the plurality of similarity matrices comprise a one-to-one attack similarity matrix that is generated using a respective similarity function that is configured to determine a respective similarity between security alerts based on a similarity between both a respective source of each security alert and a respective destination of each security alert.

3. The method of any one of the preceding claims, wherein the plurality of similarity matrices comprise a many-to-one attack similarity matrix that is generated using a respective similarity function that is configured to determine a respective similarity between security alerts based on a similarity between a respective destination of each security alert.

4. The method of any one of the preceding claims, wherein the plurality of similarity matrices comprise a one-to-many attack similarity matrix that is generated using a respective similarity function that is configured to determine a respective similarity between security alerts based on a similarity between a respective source of each security alert.

5. The method of any one of the preceding claims, wherein a plurality of similarity matrices comprise a many-to-many attack similarity matrix that is generated using a respective similarity function that is configured to determine a respective similarity between security alerts based on a similarity between a destination port of each security alert.

6. The method of any one of the preceding claims, wherein at least one of the similarity functions is configured to determine a respective similarity between security alerts based, at least in part, on a similarity between a respective destination of one security alert and a respective source of another security alert.

7. The method of any one of the preceding claims, wherein one or more, or all, of the similarity functions are configured to determine a respective similarity between security alerts based, at least in part, on a similarity between a time to which each security alert relates.

8. The method of any one of the preceding claims, wherein the method further comprises:

classifying each of the attack graphs, the respective classification of each attack graph indicating a respective type of attack represented by that attack graph,
wherein the one or more predetermined actions are determined based on the respective classifications of the attack graph.

9. The method of claim 8, wherein classifying each of the attack graphs comprises:

converting each attack graph to a feature vector;
clustering the feature vectors together with feature vectors from known attack graphs, each of the known attack graphs being associated with a respective classification indicating a respective type of attack represented by that known attack graph; and
classifying the attack graphs that are clustered in the same cluster as a known attack graph with the same classification as that known attack graph.

10. The method of claim 9, further comprising:
classifying any attack graphs that are not clustered into the same cluster as a known attack graph with a classification indicating that they represent a new type of attack.

11. The method of any one of the preceding claims, wherein the security alerts are aggregated security alerts, each aggregated security alert representing one or more individual security alerts having substantially identical properties other than a time to which each security alert relates, wherein a difference between the times to which consecutive security alerts represented by the aggregated security alert relate is less than a predetermined threshold.

12. A computer system comprising a processor and a memory storing computer program code for performing the steps of any one of claims 1 to 11.

13. A computer program comprising instructions which, when executed by a computer, cause the computer to carry out the method of any one of claims 1 to 11.

14. A computer-readable data carrier having stored thereon the computer program of claim 13.

15. A data carrier signal carrying the computer program of claim 13.

**Figure 1**

200

START

210 — Receive security alert data

220 — Generate similarity matrices for the security alerts within the security alert data

230 — Generate attack graph(s) from the similarity matrices

240 — Take actions to mitigate attack

250 — Continue?

STOP

**Figure 2**

**Figure 3**

400

**Figure 4**

Europäisches
Patentamt
European
Patent Office
Office européen
des brevets

# EUROPEAN SEARCH REPORT

**Application Number**

EP 24 18 4889

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAZEM M SOLIMAN ET AL: "RANK: AI-assisted End-to-End Architecture for Detecting Persistent Attacks in Enterprise Networks", ARXIV.ORG, CORNELL UNIVERSITY LIBRARY, 201 OLIN LIBRARY CORNELL UNIVERSITY ITHACA, NY 14853, 6 January 2021 (2021-01-06), XP081853699, | 1-7, 12-15 | INV. G06F21/55 H04L9/40 |
| Y | * page 1 - page 5 * | 8-11 | |
| Y | US 2019/342307 A1 (GAMBLE JAMIE [CA] ET AL) 7 November 2019 (2019-11-07) | 8-10 | |
| A | * paragraph [0099] - paragraph [0102] * | 1-7, 11-15 | |
| Y | LANDAUER MAX ET AL: "Dealing with Security Alert Flooding: Using Machine Learning for Domain-independent Alert Aggregation", ACM TRANSACTIONS ON PRIVACY AND SECURITY, ACM, 2 PENN PLAZA, SUITE 701 NEW YORK NY 10121-0701 USA, vol. 25, no. 3, 9 April 2022 (2022-04-09), pages 1-36, XP059025027, ISSN: 2471-2566, DOI: 10.1145/3510581 | 11 | |
| A | * page 3 - page 3 * | 1-10, 12-15 | |
| A | US 2023/275907 A1 (BERTIGER ANNA SWANSON [US] ET AL) 31 August 2023 (2023-08-31) * the whole document * | 1-15 | |

**TECHNICAL FIELDS SEARCHED (IPC)**

G06F
H04L

The present search report has been drawn up for all claims

| Place of search | Date of completion of the search | Examiner |
|---|---|---|
| Munich | 9 October 2024 | Kletti, Till |

EPO FORM 1503 03.82 (P04C01)

## ANNEX TO THE EUROPEAN SEARCH REPORT
## ON EUROPEAN PATENT APPLICATION NO.

**EP 24 18 4889**

This annex lists the patent family members relating to the patent documents cited in the above-mentioned European search report.
The members are as contained in the European Patent Office EDP file on
The European Patent Office is in no way liable for these particulars which are merely given for the purpose of information.

**09-10-2024**

| Patent document cited in search report | | Publication date | Patent family member(s) | | Publication date |
|---|---|---|---|---|---|
| US 2019342307 | A1 | 07-11-2019 | CA | 3041871 A1 | 01-11-2019 |
| | | | CA | 3041875 A1 | 01-11-2019 |
| | | | US | 2019340354 A1 | 07-11-2019 |
| | | | US | 2019342307 A1 | 07-11-2019 |
| | | | US | 2022124108 A1 | 21-04-2022 |
| US 2023275907 | A1 | 31-08-2023 | US | 2023275907 A1 | 31-08-2023 |
| | | | WO | 2023163821 A1 | 31-08-2023 |

EPO FORM P0459

For more details about this annex : see Official Journal of the European Patent Office, No. 12/82